# EUROPÄISCHE PATENTSCHRIFT

(11) **EP 4 560 354 B1**
(45) Veröffentlichungstag und Bekanntmachung des Hinweises auf die Patenterteilung: **22.07.2026**
(21) Anmeldenummer: 24214143.0
(22) Anmeldetag: 20.11.2024
(51) Int. Cl.: G01S 7/481, G01B 1/00, G01D 11/24, G01V 8/00, G12B 9/00, G01B 11/00

(54) **VERFAHREN ZUR HERSTELLUNG EINER MESSEINHEIT UND MESSEINHEIT**
METHOD FOR MANUFACTURING A MEASURING UNIT AND MEASURING UNIT
PROCÉDÉ DE FABRICATION D'UNE UNITÉ DE MESURE ET UNITÉ DE MESURE

(30) Priorität: 21.11.2023 DE 102023132410
(43) Veröffentlichungstag der Anmeldung: 28.05.2025
(73) Patentinhaber: ifm electronic gmbh, 45128 Essen (DE)
(72) Erfinder: Köppl, Tobias, 90530 Wendelstein (DE); Huber, Kerstin, 88048 Friedrichshafen (DE); Giannetta, Daniele, 88048 Friedrichshafen (DE); Becker, Michael, 88693 Deggenhausertal (DE)
(74) Vertreter: Ifm Patentabteilung

(56) Entgegenhaltungen:
- DD-A5- 290 529
- DE-U1- 202014 103 670

## Beschreibung

Die Erfindung betrifft eine Messeinheit für ein optoelektronisches Sensorsystem, die beispielsweise zur Detektion von Objekten in der Prozessautomatisierung verwendet werden kann.

Optoelektronische Sensorsystem werden beispielsweise in der Prozessautomatisierung zur Detektion von Bauteilen in einer Produktionsumgebung, oder zur Entfernungsmessung verwendet.

Beispielsweise ist aus der DE 20 2014 103 670 U1 ein optoelektronischer Sensor mit einem Gehäuse und mit Sende-/Empfangselementen, sowie mit einem das Gehäuse stirnseitig abschließenden Gehäuseelement, in/an welchem die Sende-/Empfangselemente, sowie eine Blende und eine Leiterplatte angeordnet sind.

Die DD 290 529 A5 offenbart einen berührungslos arbeitenden optischen Schalter, mit einem auf einer Elektronikplatte angeordneten Reflexkoppler, welcher ein Sende- und ein Empfängerteil umfasst und mittels eines Klebstoffs in einem hohlzylindrischen Gehäuse fixiert ist.

Aufgabe der Erfindung ist es eine Messeinheit bereitzustellen, deren optische Komponenten sicher befestigt sind, die einfach und kostengünstig herstellbar und gegen das Eindringen von Feuchtigkeit oder Schmutz abgedichtet ist.

Die Aufgabe wird durch eine Messeinheit nach Anspruch 1 gelöst. Vorteilhafte Ausgestaltungen der Erfindung sind in den untergeordneten Ansprüchen angegeben.

Außerhalb der beanspruchten Erfindung ist ein Verfahren zur Herstellung einer Messeinheit für ein optoelektronisches Sensorsystems angegeben, die Messeinheit umfassend ein Gehäuse, in welchem eine Lichtsendeeinheit mit einer Lichtquelle und/oder eine Empfangseinheit mit einem Photodetektor, sowie eine Steuerschaltung angeordnet sind; wobei die Lichtsendeeinheit und/oder die Empfangseinheit wenigstens ein Halteelement zur Befestigung umfasst und in einem Bereich eines ersten distalen Endes des Gehäuses angeordnet ist, und wobei an dem Gehäuse eine von dem ersten distalen Ende beabstandete Öffnung zum Einbringen einer Vergussmasse ausgebildet ist. Das Verfahren umfasst die Schritte:
- Anordnen der Lichtsendeeinheit und/oder der Empfangseinheit im Bereich des ersten distalen Ende innerhalb des Gehäuses,
- Einbringen der Vergussmasse in das Gehäuse über die Öffnung, so dass das Haltelement wenigstens teilweise von der Vergussmasse umschlossen wird, und
- Aushärten der Vergussmasse, wobei die Lichtsendeeinheit und/oder die Empfangseinheit kraftschlüssig und/oder formschlüssig mit dieser verbunden wird.

Das Gehäuse kann beispielsweise hohlzylindrisch oder quaderförmig ausgebildet sein. Durch das Einfüllen oder Einspritzen der Vergussmasse können die Lichtsendeeinheit und/oder die Empfangseinheit nun auf einfache Art und Weise befestigt werden. Insbesondere kann dabei mittels eines aus der Vergussmasse gebildeten Füllkörpers auch eine Dichtung des Gehäuses zum ersten und/oder zweiten distalen Ende hin ausgebildet werden. Die Lichtsendeeinheit kann insbesondere eine Strahlungsquelle, wie eine Laserdiode oder Leuchtdiode, sowie eine Sendelinse umfassen. Das Befestigen der Lichtsendeeinheit kann insbesondere mittels des Befestigens Strahlungsquelle. Ebenso kann es vorgesehen sein, dass das Befestigen der Lichtsendeeinheit mittels des Befestigens einer Sendelinse, beziehungsweise einer die Sendelinse tragenden Linseneinheit erfolgt.

Die Empfangseinheit kann insbesondere eine Empfangslinse umfassen. Entsprechend kann das Befestigen der Empfangseinheit das Befestigen der Empfangslinse, beziehungsweise einer die Empfangslinse tragenden Linseneinheit umfassen.

Die Messeinheit kann einen Bauteilträger zum Befestigen der Lichtsendeeinheit und die Lichtsendeeinheit einen Justageträger (85) umfassen, wobei vor dem Einbringen der Vergussmasse ein Verfahrensschritt umfassend das Anordnen der Lichtsendeeinheit in einer Ausnehmung des Bauteilträgers, und ein Verfahrensschritt umfassend das Ausrichten der Lichtsendeeinheit zum Justieren einer optischen Achse vorgesehen sind. Vorzugsweise wird der Justageträger beim Einspritzen der Vergussmasse dann wenigstens teilweise von der Vergussmasse umschlossen. Vorzugsweise bildet sich dann zwischen dem Justageträger und dem sich aus der Vergussmasse bildenden Füllkörper eine kraftschlüssige und/oder formschlüssige Verbindung aus.

Die Vergussmasse kann beispielsweise auf einem der folgenden thermoplastischen Materialien basieren: Polyamid (PA), Polythylen (PE), Polyurethan, AcrylnitrilButadien-Styrol (ABS), Polypropylen (PP), Polycarbonat (PC), oder thermoplastische Elastomere. Die Vergussmasse kann durch Füllstoffe, beispielsweise durch einen Glasfaseranteil, verstärkt sein. Insbesondere kann die Vergussmasse eine aufschäumende Vergussmasse, beispielsweise PU(Polyurethan)-Schaum oder Acrylat-Schaum umfassen.

Vorzugsweise umfasst das Verfahren entsprechend eine Aufschäumphase, in welcher die Vergussmasse aufschäumt. Beispielsweise kann das Verfahren ein thermoplastisches Schaumspritzgussverfahren sein. Das Verwenden einer aufschäumenden Vergussmasse hat den Vorteil, dass die Vergussmasse auch in Hohlräume steigen kann. Dadurch kann sichergestellt werden, dass die Vergussmasse auch in schwer zugängliche Freiräume innerhalb des Gehäuses vordringen kann. Ferner kann dadurch einfach erreicht werden, dass die Vergussmasse beide distalen Enden des Gehäuses abdichtet. Eine aufschäumende Vergussmasse zeichnet sich auch dadurch aus, dass Oberflächen mit vergleichsweise wenig Einfallsstellen hergestellt werden können. Durch das Verwenden einer aufschäumenden Vergussmasse kann außerdem eine Messeinheit mit geringem Gewicht und hoher Festigkeit hergestellt werden. Ferner kann es vorgesehen sein, dass die Vergussmasse an dem ersten distalen Ende und/oder am zweiten distalen Ende in so gelegene Hohlräume vordringen kann, so dass die Vergussmasse nach dem Aushärten von außen sichtbar ist. Somit kann der Erfolg des Vergussprozesses einfach durch eine optische Kontrolle überprüft werden.

Die aufschäumende Vergussmasse kann beispielsweise ein harter Schaum, beispielsweise ein harter Integralschaum umfassend PP, PA, PC und ABS sein. Beim Verwenden eines harten Schaums kann der zu füllende Hohlraum beispielsweise zu 20% bis 40% des Volumens mit dem harten Schaum gefüllt werden. Ein harter Schaum benötigt vergleichsweise wenig Vergussmaterial, so dass eine besondere kostengünstige Herstellung möglich ist.

Beim Verwenden eines weichen Schaums, beispielsweise eines weichen Integralschaums der thermoplastischen Elastomere umfasst, kann der zu füllende Hohlraum in manchen im Bereich von 50% bis 80% des zu füllenden Volumens befüllt werden. Nach dem Aufschäumen wird das zu füllende Volumen dann durch den gebildeten Füllkörper vollständig ausgefüllt. Ein weicher Schaum hat den Vorteil, dass der beim und/oder nach dem Aufschäumen ausgeübte Druck auf Bauteile wie elektronische Komponenten vergleichsweise gering ist, so dass das Risiko einer Beschädigung dieser Bauteile gering und somit die Prozesssicherheit vergleichsweise hoch ist.

Besonders bevorzugt besteht die Vergussmasse aus einem Material, welches in ausgehärtetem Zustand wenigstens teilweise transparent für Licht im sichtbaren Spektralbereich ist. Dies hat den Vorteil, dass die mittels des Verfahrens hegestellte Messeinheit ein Leuchtmittel, beispielsweise eine oder mehrere Leuchtdioden, umfassen kann, welche von dem gebildeten Füllkörper wenigstens teilweise umgeben sind. Das von dem Leuchtmittel/der Leuchtdiode ausgesendete Licht kann dann durch den Füllkörper in eine von außen sichtbare Anzeigevorrichtung gesendet werden, so dass eine optische Anzeige bereitgestellt werden kann. Alternativ kann es vorgesehen sein, dass ein Verfahrensschritt vorgesehen ist, in welchem die Leuchtmittel mit der Anzeigevorrichtung verklebt werden, beispielsweise mittels eines Acrylat umfassenden Klebers. Nach dem Verkleben des Leuchtmittels mit der Anzeigevorrichtung kann dann die Vergussmasse
In manchen Ausgestaltungen umfasst das Verfahren, vor dem Einbringen der Vergussmasse, einen Schritt zum Anordnen einer elastischen Hüllschicht zwischen einer ersten Leiterplatte und dem Füllkörper. Die elastische Hüllschicht kann beispielsweise als Schrumpfschlauch ausgebildet sein. Somit können die elektronischen Komponenten der ersten Leiterplatte geschützt werden, wobei insbesondere ein Abbrechen von elektronischen Komponenten während des Aushärtens der Vergussmasse verhindert werden kann.

Die Erfindung betrifft eine Messeinheit für ein optoelektronisches Sensorsystem, umfassend ein Gehäuse, in welchem eine Lichtsendeeinheit mit einer Lichtquelle und/oder eine Empfangseinheit mit einem Photodetektor, sowie eine Steuerschaltung angeordnet sind; wobei die Lichtsendeeinheit und/oder die Empfangseinheit wenigstens ein Halteelement zur Befestigung umfasst und in einem Bereich eines ersten distalen Endes des Gehäuses angeordnet ist, wobei das Gehäuse wenigstens teilweise mit einem vergossenen Füllkörper gefüllt und der Füllköper formschlüssig und/oder kraftschlüssig mit dem Haltelement zum Befestigen der Lichtsendeeinheit und/oder der Empfangseinheit verbunden ist, wobei die Messeinheit einen an dem Gehäuse befestigten Bauteilträger umfasst, wobei die Lichtsendeeinheit eine Strahlungsquelle und einen Justageträger umfasst und mittels des Füllkörpers kraftschlüssig und/oder formschlüssig an dem Bauteilträger befestigt ist, und wobei der Bauteilträger eine in Richtung des ersten distalen Endes geöffnete Ausnehmung aufweist, wobei der Justageträger auf einer dem ersten distalen Ende abgewandten Seite konvex ausgebildet und in der Ausnehmung angeordnet ist, und wobei die Ausnehmung eine erste Öffnung und der Justageträger eine zweite Öffnung umfassen, wobei sich Kontaktpins der Strahlungsquelle durch die erste Öffnung und die zweite Öffnung erstrecken und wobei sich der Füllkörper durch die zweite Öffnung in die erste Öffnung und/oder in einen zwischen dem Bauteilträger und dem Justageträger ausgebildeten Zwischenraum hinein erstreckt, wobei der Justageträger mit Hilfe des Füllkörpers kraftschlüssig und/oder formschlüssig an dem Bauteilträger befestigt ist.

Somit ist eine Messeinheit angegeben, welche einfach hergestellt werden kann und eine sichere Befestigung der Empfangseinheit und/oder der Sendeeinheit ermöglicht.

Vorzugsweise umfasst die Empfangseinheit eine erste Linseneinheit mit einer Empfangslinse zum Fokussieren von einfallendem Licht auf den Photodetektor, wobei die erste Linseneinheit wenigstens ein Haltelement zur Befestigung der Empfangseinheit mittels des Füllkörpers umfasst. Zwischen der Empfangslinse und dem optischen Sensor kann in manchen Ausgestaltungen eine Stufengeometrie zur Reduktion von Streulicht oder von Reflexionen ausgebildet sein.

Alternativ oder zusätzlich kann die Sendeeinheit eine zweite Linseneinheit mit einer Sendelinse zum Fokussieren des von der Lichtquelle gesendeten Lichts umfassen, wobei die zweite Linseneinheit wenigstens ein Haltelement zur Befestigung der Sendeeinheit mittels des Füllkörpers umfasst.

Der Füllkörper kann insbesondere eine formschlüssige und/oder kraftschlüssige Befestigung des jeweiligen Halteelementes bewirken und damit eine sichere Befestigung der ersten Linseneinheit und/oder der zweiten Linseneinheit bewirken.

In manchen bevorzugten Ausgestaltungen können die erste Linseneinheit und die zweite Linseneinheit integral miteinander ausgebildet sein. Es kann also eine Linseneinheit vorgesehen sein, welche die Sendelinse und die Empfangslinse, sowie wenigstens ein Halteelement zur Befestigung mittels des Füllkörpers umfasst. In solchen Ausgestaltungen können somit sowohl die Lichtsendeeinheit als auch die Empfangseinheit mittels des Füllkörpers befestigt sein.

Die Steuerschaltung kann eine zweite Leiterplatte umfassen, auf welcher ein optischer Sensor des Photodetektors angeordnet ist, wobei die zweite Leiterplatte insbesondere in einer Ebene senkrecht zu einer optischen Achse der Empfangslinse oder senkrecht zu einer axialen Richtung des Gehäuses angeordnet sein kann. Eine dem optischen Sensor gegenüberliegende Seite der zweiten Leiterplatte kann dann wenigstens teilweise von dem Füllkörper (101a) umgeben sein. Somit kann die Empfangseinheit auch im Bereich des optischen Sensors befestigt werden.

Zusätzlich oder alternativ kann die Steuerschaltung eine zweite Leiterplatte umfassen, welche sich in einer Richtung parallel zur optischen Achse der Empfangslinse oder in einer Richtung parallel zur axialen Richtung des Gehäuses erstreckt, wobei auf der zweiten Leiterplatte befindliche elektronischen Bauteile wenigstens teilweise von dem Füllkörper umgeben sind. Somit kann auch eine Befestigung der zweiten Leiterplatte mittels des Füllkörpers bereitgestellt werden.

In manchen Ausgestaltungen sind an dem zweiten distalen Ende Anschlusspins oder ähnlichen elektrischen Kontakte zur Versorgung und/oder Ansteuerung der Messeinheit ausgebildet sind, wobei der Füllkörper eine Dichtung des Gehäuses im Bereich der Anschlusspins ausbildet. Die Anschlusspins können beispielsweise Teil eines Steckverbinders sein. Insbesondere kann die erste Leiterplatte mit den Anschlusspins verbunden sein, um eine elektrische Kontaktierung der Messeinheit zu ermöglichen. Die erste Leiterplatte kann, abgesehen von der Kontaktierung, teilweise oder vollständig von dem Füllkörper umgeben sein.

Der Füllkörper kann auch eine Abdichtung der auf der ersten Leiterplatte und/oder der zweiten Leiterplatte angeordneten Komponenten bereitstellen. Die zweite Leiterplatte kann an der ersten Leiterplatte befestigt sein und diese elektrisch kontaktieren.

In manchen Ausgestaltungen kann zwischen der ersten Leiterplatte und dem Füllkörper eine elastische Hüllschicht, beispielsweise in Form eines Schrumpfschlaues vorgesehen sein. Dadurch kann insbesondere beim Herstellen der Messeinheit verhindert werden, dass beim Aufschäumen oder Aushärten der Vergussmasse elektronische Komponenten der ersten Leiterplatte beschädigt oder abgerissen werden.

Die Lichtsendeeinheit kann insbesondere eine Laserdiode oder eine Leuchtdiode umfassen. Als Leuchtdiode kann sowohl ein Kantenemitter als auch ein Oberflächenemitter verwendet werden. Insbesondere kann die Lichtsendeeinheit auch ein Array mit mehreren Leuchtdioden umfassen.

An dem Gehäuse der erfindungsgemäßen Messeinheit ist ein Bauteilträger befestigt, wobei die Lichtsendeeinheit eine Strahlungsquelle und einen Justageträger umfasst und mittels des Füllkörpers kraftschlüssig und/oder formschlüssig an dem Bauteilträger befestigt ist. Beispielsweise kann die Lichtsendeeinheit als Strahlungsquelle eine auf dem Justageträger befestigte Laserdiode mit einem Kollimator umfassen. Somit kann die Lichtsendeeinheit durch das Befestigen an dem Bauteilträger in dem Gehäuse befestigt werden.

Erfindungsgemäß weist der Bauteilträger eine in Richtung des ersten distalen Endes geöffnete Ausnehmung auf. Der Justageträger ist erfindungsgemäß auf einer dem ersten distalen Ende abgewandten Seite konvex ausgebildet und in der Ausnehmung angeordnet. Erfindungsgemäß umfassen die Ausnehmung eine erste Öffnung und der Justageträger eine zweite Öffnung, wobei sich Kontaktpins der Strahlungsquelle durch die erste Öffnung und die zweite Öffnung erstrecken.

Erfindungsgemäß erstreckt sich der Füllkörper durch die zweite Öffnung in die erste Öffnung und/oder in einen zwischen dem Bauteilträger und dem Justageträger ausgebildeten Zwischenraum hinein. Der Justageträger ist mit Hilfe des Füllkörpers kraftschlüssig und/oder formschlüssig an dem Bauteilträger befestigt.

Vorteilhaft ist an dem Justageträger wenigstens ein Haltelement ausgebildet, welches eine sichere Befestigung des Justageträgers ermöglicht, beispielsweise in Form eines Vorsprungs oder einer Ausnehmung. Insbesondere können an einer inneren Umfangsfläche der zweiten Öffnung Vorsprünge oder Ausnehmungen ausgebildet sein, welche mit dem Füllkörper derart zusammenwirken, dass eine formschlüssige und/oder kraftschlüssige Befestigung des Justageträgers an dem Bauteilträger mittels des Füllkörpers ausgebildet ist.

Ferner kann der Bauteilträger wenigstens eine in axialer Richtung verlaufende Nut oder ein Durchgangsloch umfassen, wobei die Halteelemente der ersten Linseneinheit und/oder der zweiten Linseneinheit jeweils in eine Nut oder ein Durchgangsloch hineinragen und mittels des Füllkörpers befestigt sind. Der Füllkörper kann die Nut oder das Durchgangsloch jeweils so füllen, dass dieses durch den Füllkörper abgedichtet ist.

Vorzugsweise dichtet der Füllkörper das Gehäuse zum ersten distalen Ende der Messeinheit hin ab. Insbesondere kann durch den Füllkörper am ersten distalen Ende eine Dichtung im Bereich optischer Komponenten, insbesondere im Bereich der ersten und/oder der zweiten Linseneinheit ausgebildet sein. Der Füllkörper kann sich dabei in einen zwischen dem Bauteilträger und dem Gehäuse ausgebildeten Zwischenraum oder Spalt hineinerstrecken, wodurch das Gehäuse zum ersten distalen Ende hin abgedichtet wird.

Ferner kann das Gehäuse ein dem ersten distalen Ende gegenüberliegendes zweites distales Ende umfassen, wobei an dem zweiten distalen Ende Anschlusspins zur elektrischen Kontaktierung der Messeinheit ausgebildet sind. Vorteilhaft bildet der Füllkörper dann eine Dichtung des Gehäuses im Bereich der Anschlusspins aus.

Der Füllkörper kann aus einer Vergussmasse, vorzugsweise aus einer aufschäumenden Vergussmasse mittels eines oben beschriebenen Verfahrens hergestellt. Der Füllkörper kann das Gehäuse in einer axialen Richtung vollständig, oder wenigstens so weit ausfüllen, dass der Füllkörper an dem ersten distalen Ende und an dem zweiten distalen Ende jeweils eine Dichtung des Gehäuses ausbildet.

Somit kann eine Messeinheit bereitgestellt werden, welche eine durch den Füllkörper ausgebildete Dichtung aufweist und damit gegen das Eindringen von Feuchtigkeit oder Schmutz geschützt ist. Zusätzlich sind die Empfangseinheit und/oder die Lichtsendeeinheit und optional weitere Komponenten mittels des Füllkörpers in dem Gehäuse sicher befestigt.

In manchen Weiterbildungen der Messeinheit kann in dem Gehäuse ein Leuchtmittel angeordnet sein, wobei das Gehäuse ein wenigstens teilweise transparentes Gehäuseteil zum Bereitstellen einer Leuchtanzeige umfasst, welches einen Teil der äußeren Oberfläche des Gehäuses bildet. Die Leuchtanzeige kann beispielsweise einen Betriebszustand oder eine Messgröße anzeigen.

Insbesondere kann der Füllkörper einen Raum zwischen dem Leuchtmittel und dem transparenten Gehäuseteil ausfüllen, wobei der Füllkörper für das von dem Leuchtmittel ausgesendete Licht wenigstens teilweise transparent ist. Das von dem Leuchtmittel emittierte Licht kann dann durch den Füllkörper strahlen und an einem Innenumfang des transparenten Gehäuseteils in dieses eingekoppelt werden, so dass es schließlich an dessen Außenumfang austreten und zur optischen Anzeige verwendet werden kann. Das Leuchtmittel kann beispielsweise eine oder mehrere Leuchtdioden umfassen. Die Leuchtdioden können in manchen Ausgestaltungen auf der ersten Leiterplatte angeordnet sein. Alternativ kann eine separate Leuchtmittel-Leiterplatte vorgesehen sein, welche die erste Leiterplatte kontaktiert und auf welcher die Leuchtmittel angeordnet sind.

Die Messeinheit kann insbesondere entsprechend einer der folgenden Varianten ausgebildet sein:
a) Als Messeinheit mit einer Lichtsendeeinheit und mit einer den Photodetektor umfassenden Empfangseinheit, sowie mit der ersten Linseneinheit, welche die Empfangslinse umfasst. Die Lichtsendeeinheit kann hier insbesondere als Laserdiode mit einem Kollimator ausgebildet sein.
b) Als Messeinheit mit einer Lichtsendeeinheit und mit einer den Photodetektor umfassenden Empfangseinheit, sowie mit der ersten Linseneinheit, welche die Empfangslinse umfasst und mit der zweiten Linseneinheit, welche die Sendelinse umfasst. Diese Ausgestaltung kann insbesondere eine Lichtsendeeinheit mit einer oder mehreren Leuchtdioden umfassen.
c) Als Messeinheit mit einer Lichtsendeeinheit und mit einer den Photodetektor umfassenden Empfangseinheit, sowie mit einer einteilig ausgebildeten ersten Linseneinheit und zweiten Linseneinheit, welche sowohl die Empfangslinse als auch die Sendelinse umfasst. Diese Ausgestaltung kann insbesondere eine Lichtsendeeinheit mit einer oder mehreren Leuchtdioden umfassen.
d) Als Messeinheit mit einer mit einer den Photodetektor umfassenden Empfangseinheit, sowie mit der zweiten Linseneinheit, welche die Empfangslinse umfasst. Diese Ausgestaltung kann insbesondere eine oder mehrere Leuchtdiode als Lichtsendeeinheit umfassen.
e) Als Messeinheit mit einer Lichtsendeeinheit, sowie mit der ersten Linseneinheit, welche die Sendelinse umfasst. Diese Ausgestaltung kann insbesondere eine oder mehrere Leuchtdiode als Lichtsendeeinheit umfassen.
f) Als Messeinheit, welche die Lichtsendeeinheit umfasst. Die Lichtsendeeinheit kann hier insbesondere als Laserdiode mit einem Kollimator ausgebildet sein.

In allen Varianten können die erste Linseneinheit und/oder die zweite Linseneinheit entsprechende Halteelemente aufweisen und mittels des Füllkörpers und der Halteelemente in dem Gehäuse, beispielsweise an einer inneren Oberfläche des Gehäuses oder an dem Bauteilträger, befestigt sein. In solchen Ausgestaltungen, in welchen die Lichtsendeeinheit als Laserdiode ausgebildet ist, kann diese ebenfalls mit Hilfe des Füllkörpers im Gehäuse, beispielsweise an einer inneren Oberfläche des Gehäuses oder an dem Bauteilträger, befestigt sein. Insbesondere kann die Laserdiode jeweils auf einem Justageträger mit Halteelementen angeordnet sein, wobei die Haltelemente mittels des Füllkörpers befestigt werden.

Ferner ist ein optoelektronisches Sensorsystem mit wenigstens einer erfindungsgemäßen Messeinheit angegeben, wobei die Messeinheit die Lichtsendeeinheit und die Empfangseinheit umfasst.

Desweiteren ist ein optoelektronisches Sensorsystem mit wenigstens zwei separaten, erfindungsgemäßen Messeinheiten angegeben, wobei eine der Messeinheiten die Empfangseinheit und eine der Messeinheiten die Sendeeinheit umfasst.

Nachfolgend wird die Erfindung anhand von Ausführungsbeispielen unter Bezugnahme auf die Zeichnungen näher erläutert.

Es zeigen schematisch:
- Figur 1: eine Schnittansicht einer beispielhaften Ausgestaltung einer erfindungsgemäßen Messeinheit mit einer Lichtsendeeinheit und mit einer Empfangseinheit, welche eine erste Linseneinheit umfasst;
- Figur 2: eine perspektivische Ansicht der Messeinheit aus Figur 1;
- Figur 3: eine Draufsicht auf das erste distale Ende einer alternativen Ausgestaltung der Messeinheit mit einer ersten Linseneinheit und einer zweiten Linseneinheit;
- Figur 4: eine perspektivische Ansicht eines Bauteilträgers einer weiteren, beispielhaften Ausgestaltung einer Messeinheit mit einer einteilig ausgebildeten ersten Linseneinheit und zweiten Linseneinheit;
- Figur 5: eine Schnittansicht der Messeinheit aus Figur 1 im Bereich des Bauteilträgers;
- Figur 6: eine weitere Schnittansicht der Messeinheit aus Figur 1 im Bereich der Lichtsendeeinheit und des Photodetektors; und
- Figur 7: ein schematisches Ablaufdiagramm einer beispielhaften Ausgestaltung eines Verfahrens zur Herstellung einer Messeinheit,

Bei der nachfolgenden Beschreibung der bevorzugten Ausführungsformen bezeichnen gleiche Bezugszeichen gleiche oder vergleichbare Komponenten.

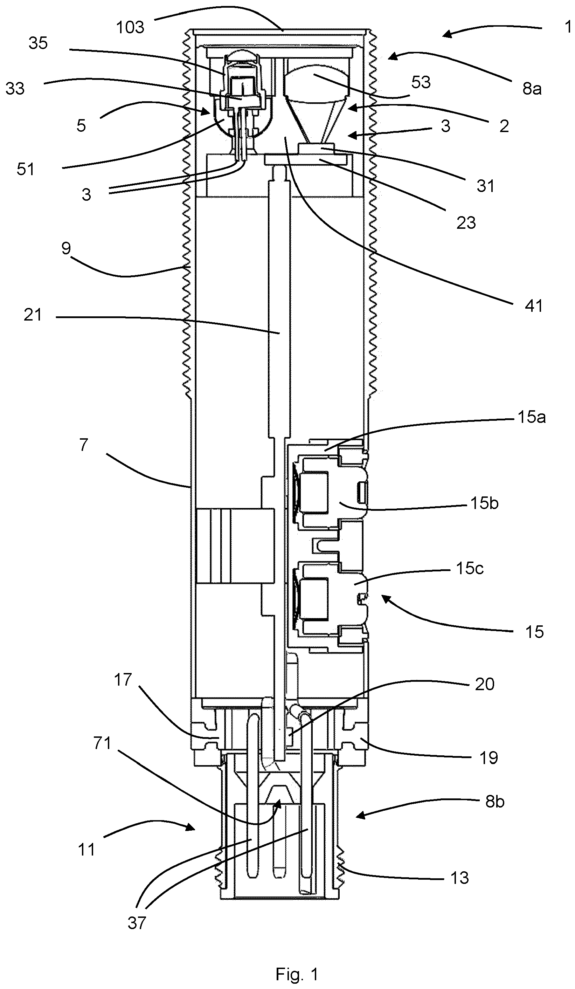

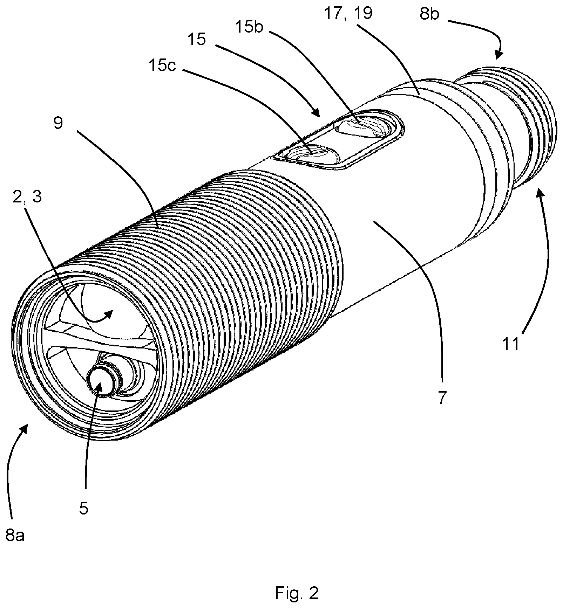

In den Figuren 1 und 2 ist eine beispielhafte Ausgestaltung einer Messeinheit 1 für ein optoelektronisches Sensorsystem dargestellt, wobei die Figur 1 eine Schnittansicht und die Figur 2 eine perspektivische Ansicht zeigen. Die Messeinheit 1 umfasst eine Empfangseinheit 2 mit einem Photodetektor 3, sowie eine Lichtsendeeinheit 5 mit einer Lichtquelle, welche in einem Gehäuse 7 angeordnet sind. Die Messeinheit 1 ist beispielsweise zur Detektion von Objekten ausgebildet. Dabei kann das von der Lichtsendeeinheit ausgesendete Licht an einem Objekt oder einem Reflektor reflektiert und durch den Photodetektor 3 detektiert werden.

Das Gehäuse 7 ist im Wesentlichen hohlzylindrisch mit einem ersten distalen Ende 8a und einem zweiten distalen Ende 8b ausgebildet. Am ersten Distalen Ende ist ein Außengewinde 9 zum Befestigen der Messeinheit 1 ausgebildet. Ein Anschlussteil 11 mit einem zweiten Außengewinde 13 stellt einen Anschluss zur elektrischen Versorgung und Ansteuerung der Messeinheit 1 bereit. Ferner umfasst die Messeinheit 1 eine Eingabeeinheit 15, welche im Beispiel zwei in einem Schaltergehäuse 15a angeordnete Dreh-Drückschalter 15b, 15c umfasst. Die Dreh-Drückschalter können beispielsweise als GMR-Sensoren ausgebildet sein. Mittels der Dreh-Drückschalter können beispielsweise Einstellungen zur Konfiguration der Messeinheit 1 vorgenommen werden.

Desweiteren umfasst die Messeinheit 1 eine Anzeigeeinheit 17. Die Anzeigeeinheit 17 umfasst einen umlaufenden transparenten Ring 19, welcher zum Aussenden von Licht ausgebildet ist und einen Teil der äußeren Oberfläche des Gehäuses 7 bildet. Ferner umfasst die Anzeigeeinheit 17 ein Leuchtmittel 20, beispielsweise eine oder mehrere Leuchtdioden zum Beleuchten der Anzeigeeinheit 17.

In dem Gehäuse sind eine erste Leiterplatte 21 und eine zweite Leiterplatte 23 angeordnet. Dabei verläuft die erste Leiterplatte 21 in einer axialen Richtung des Gehäuses 7. Die zweite Leiterplatte 23 ist senkrecht zur ersten Leiterplatte 21 angeordnet und mit dieser elektrisch verbunden. Auf eine dem ersten distalen Ende 8a des Gehäuses 7 zugewandten Seite der zweiten Leiterplatte 23 ist ein optischer Sensor 31 des Photodetektors 3 zur Detektion einfallenden Lichts angeordnet. Ferner ist eine Laserdiode 33 als Lichtsendeeinheit 5 dargestellt, mit einem Kollimator 35 und mit Kontaktpins 37 zur elektrischen Kontaktierung. Die Kontaktpins 37 können beispielsweise mittels Drähte oder mittels einer flexiblen Leiterplatte (in der Figur nicht dargestellt) mit der ersten Leiterplatte 21 elektrisch verbunden sein. Am ersten distalen Ende 8a des Gehäuses ist eine Öffnung 39 vorgesehen, über welche von der Laserdiode 33 emittierte Strahlung ausgesendet und reflektiertes, einfallendes Licht auf den optischen Sensor 31 treffen kann. Die Öffnung 39 ist mit einer transparenten Abdeckung 103 abgedeckt. Zur Befestigung von Komponenten des Photodetektors 3 und der Lichtsendeeinheit 5 ist ein Bauteilträger 41 vorgesehen. Der Bauteilträger 41 weist im Wesentlichen einen zylindrischen Außenumfang auf, welcher sich am Innenumfang des Gehäuses 7 abstützt. An dem Bauteilträger 41 sind insbesondere der optische Sensor 18, sowie die Laserdiode 33 angeordnet.

Am ersten distalen Ende 8a des Gehäuses 7 ist im Bereich der Öffnung 39 ferner eine erste Linseneinheit 51 mit einer Empfangslinse 53 zum Fokussieren von einfallendem Licht auf den Photodetektor 3, beziehungsweise auf den optischen Sensor 31, angeordnet. Die erste Linseneinheit 51 umfasst wenigstens ein Halteelement 59 zum Befestigen der ersten Linseneinheit 51, beziehungsweise der Empfangseinheit 2 in dem Gehäuse 7.

An dem zweiten distalen Ende 8b des Gehäuses 7 ist im Bereich des Anschlussteils 11 eine Öffnung 71 vorgesehen, über welche dort angeordnete Anschlusspins 73 zur Versorgung der Messeinheit 1 mit Strom und zur Ansteuerung kontaktiert werden können. Die Anschlusspins 73 sind an ihrem innenliegenden Ende an der ersten Leiterplatte 21 befestigt und kontaktieren diese elektrisch.

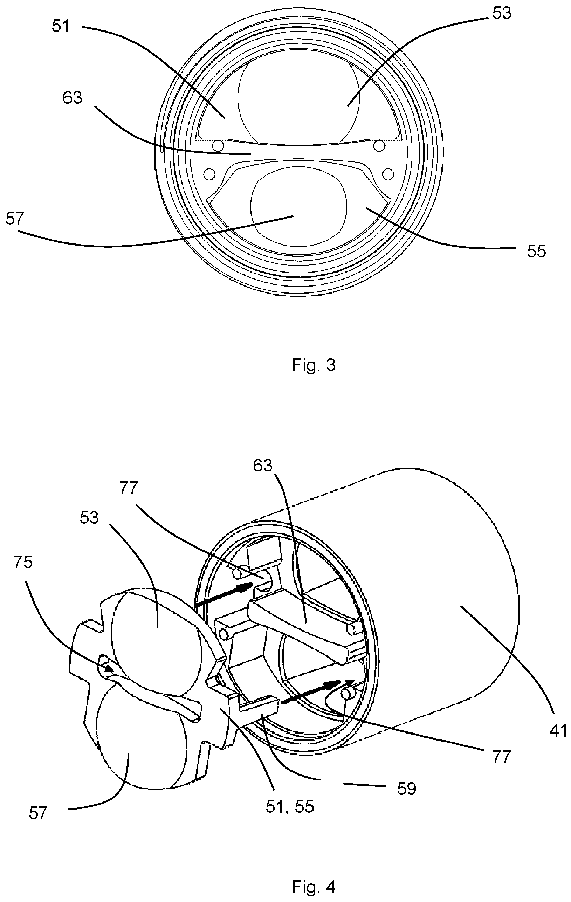

In der Figur 3 ist eine Draufsicht auf das erste distale Ende 8a einer alternativen Ausgestaltung der Messeinheit 1 gezeigt, wobei im Unterschied zu den Figuren 1 und 2 neben der ersten Linseneinheit 51 mit der Empfangslinse 55 eine zweite Linseneinheit 55 mit einer Sendelinse 57 vorgesehen ist. Dies kann insbesondere bei Ausgestaltungen vorteilhaft sein, in welchen die Lichtsendeeinheit 5 eine Leuchtdiode umfasst. Während Laserdioden typischerweise einen Kollimator mit einer bereits integrierten Linse umfassen, benötigen Leuchtdioden meist eine separate Sendelinse. Die zweite Linseneinheit 55 mit der Sendelinse 57 ist im optischen Weg des von der Lichtquelle 6 emittierten Lichts angeordnet, so dass dieses fokussiert werden kann. Analog zur ersten Linseneinheit, umfasst die zweite Linseneinheit 55 ebenfalls wenigstens ein Halteelement 59 zur Befestigung der Lichtsendeeinheit 5 in dem Gehäuse 7. Im Beispiel umfassen die beiden Linseneinheiten 51, 55 jeweils zwei Halteelemente 59. Die Halteelemente 59 sind im Wesentlichen Stabförmig ausgebildet. Zwischen der ersten Linseneinheit 51 und der zweiten Linseneinheit 55 ist ein Steg 63 ausgebildet, so dass ein optisches Übersprechen zwischen der Empfangslinse 53 und der Sendelinse 57 minimiert wird.

In der Figur 4 ist eine alternative Ausgestaltung der Messeinheit 1 in einer perspektivischen, teilweise explodierten Ansicht dargestellt. In dieser Ausgestaltung sind die erste Linsen Linseneinheit 51 und die zweite Linseneinheit 55 integral miteinander ausgebildet. Diese einteilig ausgebildete Linseneinheit umfasst sowohl die Sendelinse 59, als auch die Empfangslinse 53. Auch solch eine Ausgestaltung kann insbesondere bei der Verwendung von Leuchtdioden als Lichtsendeeinheit 5 vorteilhaft sein. Zwischen den beiden Linsen 53, 59 ist eine Ausnehmung 75 ausgebildet, durch welche sich der Steg 63 zum Verhindern des optischen Übersprechens erstreckt. Die erste Linseneinheit 51 ist hier zur besseren Darstellung des Halteelementes 55 explodiert, entsprechend einem nicht montiertem Zustand, gezeigt.

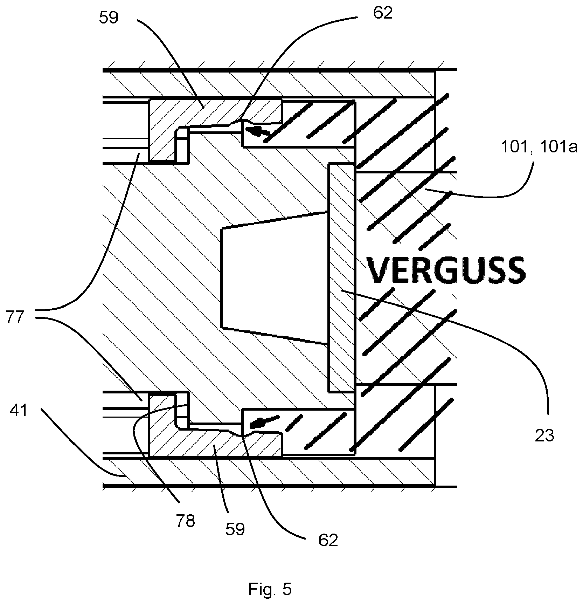

Die Figur 5 illustriert nun in einer Schnittansicht die Befestigung der optischen Bauteile mittels einer Vergussmasse 101, anhand der in den Figuren 1 und 2 gezeigten Ausgestaltung. In der Figur 5 sind auch gut zwei Halteelemente 59 der ersten Linseneinheit 51 zu erkennen. Im Beispiel sind die Halteelemente 59 als Vorsprünge ausgebildet. Entsprechend sind in dem Bauteilträgers 41 zwei in einer Richtung parallel zur axialen Richtung verlaufende Durchgangslöcher 77 ausgebildet, welche die Halteelemente 59 aufnehmen. Die Halteelemente 59 weisen jeweils eine Ausbuchtung 62 oder Nut auf. In den Durchgangslöchern 77 kann an dem Bauteilträger 41 jeweils eine Stufe oder ein Vorsprung 78 ausgebildet sein, so dass ein Anschlag für die Haltelemente 59 bereitgestellt werden kann. Ferner kann dadurch im Zusammenspiel mit den Halteelementen 59 ein Dichtungsspalt ausgebildet werden.

Die Vergussmasse 101 kann während des Herstellungsprozesses vorzugsweise über die am zweiten distalen Ende 8b angeordnete Öffnung 71 eingefüllt werden, so dass diese einen Hohlraum der Messeinheit 1 füllt und nach dem Aushärten einen Füllkörper 101a bildet. Die Vergussmasse 101 kann dabei entlang der Durchgangslöcher 77 fließen und die Halteelemente 59 wenigstens teilweise umschließen. Die Vergussmasse kann insbesondere in die Ausbuchtungen 62 der Halteelemente 59 eindringen. Somit wird die erste Linseneinheit 51 nach dem Aushärten der Vergussmasse 101 mittels des Füllkörpers 101a sicher am Gehäuse 7 befestigt. Insbesondere wird eine formschlüssige und/oder kraftschlüssige Befestigung der Halteelemente 59 und damit auch der ersten Linseneinheit 51 (und gegebenenfalls der zweiten Linseneinheit 55) erzielt. In Ausgestaltungen, welche auch eine zweite Linseneinheit 55 umfassen, können die Halteelemente 59 der zweiten Linseneinheit 55 ebenfalls entsprechende Ausbuchtungen 62 zur Befestigung mittels des Füllkörpers 101a aufweisen. Ebenso können dann am Bauteilträger 41 Durchgangslöcher 77 zum Befestigen der zweiten Linseneinheit 55 vorgesehen sein.

Desweiteren kann mittels des Füllkörpers 101a eine Abdichtung des Gehäuses 7 an seinem ersten distalen Ende 8a bereitgestellt werden, so dass keine Flüssigkeit, Feuchtigkeit oder Schmutz in das Gehäuseinnere eindringen kann. Der Füllkörper 101a bedeckt ferner eine dem ersten distalen Ende 8a abgewandte Seite der ersten Leiterplatte 21.

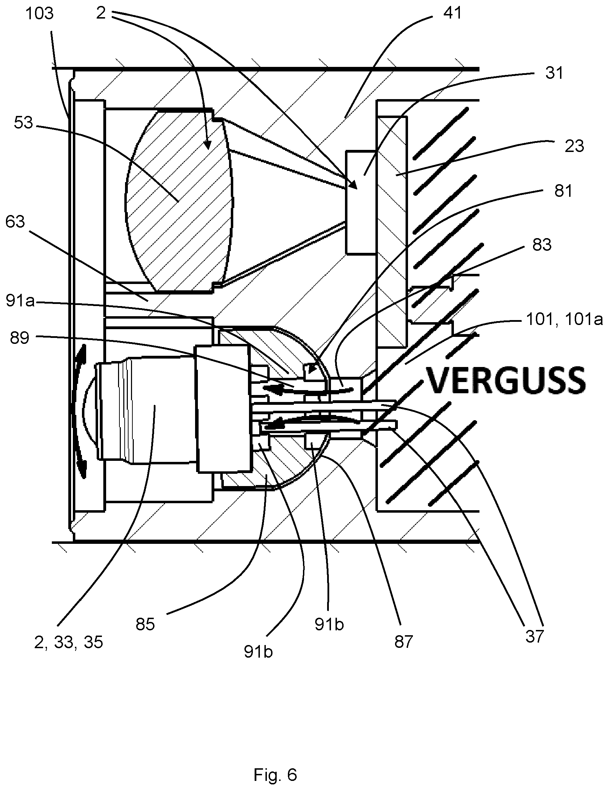

Die Figur 6 zeigt eine weitere Schnittansicht der Messeinheit der Figuren 1 und 2 zur Illustration weiterer Aspekte hinsichtlich der Befestigung der optischen Komponenten mittels der Vergussmasse 101/des Füllkörpers 101a. Der Bauteilträger 41 umfasst eine zum ersten distalen Ende 8a hin geöffnete Ausnehmung 81. Die Ausnehmung 81 kann wie dargestellt konkav ausgeformt sein und eine zum Gehäuseinneren hin gerichtete erste Öffnung 83 aufweisen. Die Laserdiode 33 ist nun auf einem Justageträger 85 angeordnet, wobei der Justageträger 85 eine Kontaktfläche 87 umfasst, welche eine zur Ausnehmung 81 komplementäre Formgebung aufweist. Insbesondere kann der Justageträger 85 eine konkav ausgebildete Kontaktfläche 87 aufweisen. Der Justageträger 85 umfasst eine zweite Öffnung 89, durch welche sich die Kontaktpins 37 der Laserdiode 33 erstrecken. Die Kontaktpins 37 erstrecken sich ferner durch die erste Öffnung 83 und sind beispielsweise mittels Drähten oder einer flexiblen Leiterplatte mit der ersten Leiterplatte 21 elektrisch verbunden.

Ferner umfasst der Justageträger 85 als Vorsprünge ausgebildete Haltelemente 91a, beziehungsweise als Vertiefungen ausgebildete Haltelemente 91b. Die Vergussmasse 101 kann zum Befestigen der Lichtsendeeinheit 5 (hier umfassend die Laserdiode 33) in die zweite Öffnung 89 des Justageträgers 85 fließen. Ferner kann die Vergussmasse 101 die Haltelemente 91a der zweiten Öffnung 89 umschließen, beziehungsweise in die als Vertiefung ausgebildeten Halteelemente 91b eindringen. Somit kann nach dem Aushärten eine sichere Befestigung der Lichtsendeeinheit 5, beispielsweise der Laserdiode 33, mittels des Füllkörpers 101a erzielt werden.

Ferner kann es vorgesehen sein, dass die Vergussmasse 101 auch in einen zwischen der Kontaktfläche 87 des Justageträgers 85 und dem Bauteilträger 41 ausgebildeten Spalt eindringt. Nach dem Aushärten kann der Füllkörper 101a dann auch in diesem Bereich eine kraftschlüssige und/oder formschlüssige Befestigung des Justageträgers 85, beziehungsweise der Laserdiode 33 bewirken. Ferner stellt der Füllkörper 101a somit auch im Bereich der Lichtsendeeinheit 5 eine effektive Dichtung gegen das Eindringen von Schmutz oder Feuchtigkeit bereit.

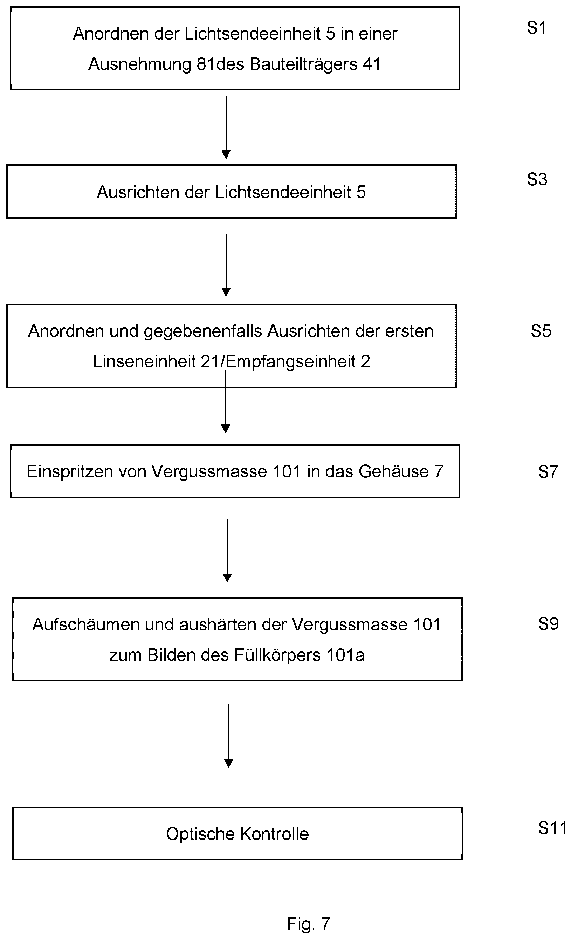

Figur 7 zeigt schematisch eine Ablaufdiagramm zur Durchführung eines Verfahrens zur Herstellung einer Messeinheit gemäß einem Beispiel. Die herzustellende Messeinheit 1 ist beispielsweise ähnlich wie eine der in den Figuren 1 bis 6 gezeigten Ausgestaltung ausgebildet. Insbesondere kann diese eine Lichtsendeeinheit 5 mit einer Laserdiode 33 als Strahlungsquelle umfassen. Zum Anordnen der Laserdiode 33 an dem Bauteilträger 41 ist wieder der Justageträger 85 vorgesehen, auf welchem die Laserdiode 33 mit dem Kollimator 35 befestigt sind.

In einem ersten Schritt S1 des Verfahrens kann nun die Lichtsendeeinheit 5 an dem Bauteilträger 41 angeordnet und in einem Schritt S3 ausgerichtet werden (wie auch durch den Doppelpfeil in Figur 6 illustriert). Die Lichtsendeeinheit 5 kann im Beispiel insbesondere als Laserdiode 33 ausgebildet sein. Die Lichtsendeeinheit 5 kann nun in der ausgerichteten Stellung gehalten werden. In einem weiteren Schritt S5 kann nun die erste Linseneinheit 51 am ersten distalen Ende 8a der Messeinheit 1 angeordnet und gegebenenfalls ausgerichtet werden. Dabei können insbesondere die Halteelemente 59 in die am Bauteilträger 41 ausgebildeten Durchgangslöcher 77 oder Nuten eingeführt werden. Insbesondere kann die Empfangslinse 53 dabei so angeordnet werden, dass einfallendes Licht auf den optischen Sensor 31 des Photodetektors 3 fokussiert wird. Die erste Linseneinheit 51 kann nun in der ausgerichteten Stellung gehalten werden, während in einem Schritt S7 Vergussmasse 101 in das Gehäuse 7 eingebracht wird. Die Vergussmasse 101 kann, beispielsweise über die am zweiten distalen Ende 8b ausgebildete Öffnung eingefüllt oder eingespritzt werden. Die Vergussmasse 101 kann nun wenigstens ein Halteelement 59 der ersten Linseneinheit 51 wenigstens teilweise umschließen.

Ferner kann es vorgesehen sein, dass die Vergussmasse 101 über die im Bauteilträger 41 ausgeformte erste Öffnung 83 in einen zwischen dem Justageträger 85 und dem Bauteilträger 41 ausgebildeten Spalt fließen kann, um die Lichtsendeeinheit 5 an dem Bauteilträger 41 zu befestigen. Desweiteren kann es in diesem Zusammenhang vorgesehen sein, dass die Vergussmasse 101 in eine Öffnung des Justageträgers 85 eindringt um dort eine kraft- und/oder formschlüssig Befestigung der Lichtsendeeinheit 5 am Bauteilträger 41 zu erzielen.

In einem weiteren Schritt S9 kann eine Wartezeit zum Aushärten der Vergussmasse 101 durchlaufen werden. Der Schritt S9 kann, bei der Verwendung aufschäumender Vergussmassen 101, insbesondere auch eine Aufschäumphase umfassen. Die Vergussmasse 101 bildet nun einen Füllkörper 101a, welcher die Empfangseinheit 2 mittels einer kraftschlüssigen und/oder formschlüssigen Verbindung befestigt. Ferner kann, je nach Ausgestaltung, auch die beschriebene kraft- und/oder formschlüssige Befestigung der Lichtsendeeinheit 5 erreicht werden. Je nach Ausgestaltung der Messeinheit, können die Verfahrensschritte zum Befestigen der Empfangseinheit 2 und/oder der Lichtsendeeinheit 5 entsprechend angepasst werden. So kann das Verfahren das Anordnen und Befestigen einer oder mehrerer der folgenden Komponenten umfassen: der ersten Linseneinheit 51, der zweiten Linseneinheit 55, der Lichtsendeeinheit 5.

In einem weiteren Aspekt kann der Füllkörper 101a, das Gehäuse 7 der Messeinheit 1 abdichten. Insbesondere kann es vorgesehen sein, dass die Messeinheit 1 im Bereich der ersten distalen Endes 8a und/oder im Bereich des zweiten distalen Endes 8b mittels des Füllkörpers 101a abgedichtet wird. Somit kann nicht nur eine Befestigung der optischen Komponenten, sondern auch eine Dichtung im Bereich der optischen Komponenten und/oder eine Dichtung im Bereich der Anschlusskontakte der Messeinheit 1 bereitgestellt werden.

Schließlich kann in einem Schritt S11 eine optische Kontrolle des Verfahrens erfolgen. Insbesondere kann es vorgesehen sein, dass die Vergussmasse 101 in Freiräume vordringen kann, die so gelegen sind, dass der aus der Vergussmasse 101 gebildete Füllkörper 101a teilweise von außen einsehbar ist. Somit kann optisch leicht überprüft werden, ob Vergussmasse 101 bis zu einem vorherbestimmten Bereich vorgedrungen ist. Ferner kann eine Prüfung der Ausrichtung der optischen Komponenten erfolgen.

Insbesondere beim Verwenden einer Leuchtdiode 33 als Strahlungsquelle können die Schritt S1 und S3 entfallen. In solchen Varianten kann die Strahlungsquelle auf der ersten Leiterplatte 21 angeordnet sein. In solchen Ausgestaltungen kann es vorgesehen sein, dass in dem Verfahren die Sendelinse 51, welche das von der Leuchtdiode emittierte Licht fokussiert, ausgerichtet und befestigt wird. Die zweite Linseneinheit 55 mit der Sendelinse 57 kann dabei separat oder einteilig mit der ersten Linseneinheit 51 ausgebildet sein. In solchen Ausgestaltungen, in welchen die erste Linseneinheit 51 und die zweite Linseneinheit jeweils als separates Bauteil ausgebildet sind, kann es im Schritt S5 vorgesehen sein, dass sowohl die erste Linseneinheit 51 als auch die zweite Linseneinheit 55 im Bereich des ersten distalen Endes 8a des Gehäuses 7 angeordnet werden. Die zweite Linseneinheit 55 kann dann, analog zur ersten Linseneinheit 51, durch das Einbringen der Vergussmasse 101 im Schritt S7 befestigt werden.

### Bezugszeichenliste

- 1: Messeinheit
- 2: Empfangseinheit
- 3: Photodetektor
- 5: Lichtsendeeinheit
- 7: Gehäuse
- 9: Außengewinde
- 11: Anschlussteil
- 13: Außengewinde
- 15: Eingabeeinheit
- 15a: Schaltergehäuse
- 15b, 15c: Dreh-Drückschalter
- 17: Anzeigeeinheit
- 19: transparenter Außenring
- 20: Leuchtmittel
- 21: erste Leiterplatte
- 23: zweite Leiterplatte
- 31: optischer Sensor
- 33: Laserdiode
- 35: Kollimator
- 37: Kontaktpins
- 39: Öffnung (erstes distales Ende)
- 41: Bauteilträger
- 51: erste Linseneinheit
- 53: Empfangslinse
- 55: zweite Linseneinheit
- 57: Sendelinse
- 59: Halteelemente
- 62: Ausbuchtung
- 63: Steg
- 71: Öffnung (zweites distales Ende)
- 73: Anschlusspins
- 75: Ausnehmung
- 77: Durchgangsloch
- 78: Vorsprung
- 81: Ausnehmung
- 83: Öffnung (des Bauteilträgers)
- 85: Justageträger
- 87: Kontaktfläche
- 89: Öffnung (des Justageträgers)
- 91a: Haltelement (Vorsprung)
- 91b: Haltelement (Vertiefung)
- 101: Vergussmasse
- 101a: Füllkörper
- 103: Abdeckung

## Patentansprüche

1. Messeinheit (1) für ein optoelektronisches Sensorsystem, umfassend ein Gehäuse (7), in welchem eine Lichtsendeeinheit (5) mit einer Lichtquelle und/oder eine Empfangseinheit (2) mit einem Photodetektor (3), sowie eine Steuerschaltung angeordnet sind;
wobei die Lichtsendeeinheit (5) und/oder die Empfangseinheit (2) wenigstens ein Halteelement (59, 91a, 91b) zur Befestigung umfasst und in einem Bereich eines ersten distalen Endes (8a) des Gehäuses (7) angeordnet ist,
wobei das Gehäuse (7) wenigstens teilweise mit einem vergossenen Füllkörper (101a) gefüllt und der Füllköper (101a) formschlüssig und/oder kraftschlüssig mit dem Haltelement (59) zum Befestigen der Lichtsendeeinheit (5) und/oder der Empfangseinheit (2) verbunden ist, **dadurch gekennzeichnet, dass** die Messeinheit einen an dem Gehäuse (7) befestigten Bauteilträger (41) umfasst, wobei die Lichtsendeeinheit (5) eine Strahlungsquelle und einen Justageträger (85) umfasst und mittels des Füllkörpers (101a) kraftschlüssig und/oder formschlüssig an dem Bauteilträger (41) befestigt ist, und wobei der Bauteilträger (41) eine in Richtung des ersten distalen Endes (8a) geöffnete Ausnehmung (81) aufweist, wobei der Justageträger (85) auf einer dem ersten distalen Ende (8a) abgewandten Seite konvex ausgebildet und in der Ausnehmung (81) angeordnet ist, und wobei die Ausnehmung (81) eine erste Öffnung (83) und der Justageträger (85) eine zweite Öffnung (89) umfassen, wobei sich Kontaktpins (37) der Strahlungsquelle durch die erste Öffnung (83) und die zweite Öffnung (89) erstrecken und wobei sich der Füllkörper (101a) durch die zweite Öffnung (89) in die erste Öffnung (83) und/oder in einen zwischen dem Bauteilträger (41) und dem Justageträger (85) ausgebildeten Zwischenraum hinein erstreckt, wobei der Justageträger (85) mit Hilfe des Füllkörpers (101a) kraftschlüssig und/oder formschlüssig an dem Bauteilträger (41) befestigt ist.

2. Messeinheit (1) nach Anspruch 1, wobei die Empfangseinheit (2) eine erste Linseneinheit (51) mit einer Empfangslinse (53) zum Fokussieren von einfallendem Licht auf den Photodetektor (3) und die erste Linseneinheit (51) wenigstens ein Haltelement (59) zur Befestigung der Empfangseinheit (2) mittels des Füllkörpers (100a) umfasst,
und/oder wobei die Lichtsendeeinheit (5) eine zweite Linseneinheit (55) mit einer Sendelinse (57) zum Fokussieren des von der Lichtquelle gesendeten Lichts und die zweite Linseneinheit (55) wenigstens ein Haltelement (59) zur Befestigung der Lichtsendeeinheit (5) mittels des Füllkörpers (100a) umfasst.

3. Messeinheit (1) nach Anspruch 2, wobei die erste Linseneinheit (51) und die zweite Linseneinheit (55) integral miteinander ausgebildet sind und die Sendelinse (53) und die Empfangslinse (57), sowie wenigstens ein Halteelement (59) zur Befestigung der Empfangseinheit (2) mittels des Füllkörpers (100a) umfassen.

4. Messeinheit (1) nach einem der Ansprüche 1 bis 3, wobei die Steuerschaltung eine zweite Leiterplatte (23) umfasst, auf welcher ein optischer Sensor (31) des Photodetektors (3) angeordnet ist, wobei die zweite Leiterplatte (23) in einer Ebene senkrecht zu einer optischen Achse der Empfangslinse (53) oder senkrecht zu einer axialen Richtung des Gehäuses (7) angeordnet ist, und wobei eine dem optischen Sensor (31) gegenüberliegende Seite der zweiten Leiterplatte (23) wenigstens teilweise von dem Füllkörper (101a) umgeben ist,
und/oder
wobei die Steuerschaltung eine erste Leiterplatte (21) umfasst, welche sich in einer Richtung parallel zur optischen Achse der Empfangslinse (53) oder in einer Richtung parallel zur axialen Richtung des Gehäuses (7) erstreckt, wobei auf der ersten Leiterplatte (21) befindliche elektronischen Bauteile wenigstens teilweise von dem Füllkörper (101a) umgeben sind.

5. Messeinheit (1) nach einem der Ansprüche 1 bis 4, wobei der Füllkörper das Gehäuse (7) zum ersten distalen Ende (8a) hin abdichtet.

6. Messeinheit (1) nach einem der Ansprüche 1 bis 5, wobei das Gehäuse (7) ein dem ersten distalen Ende (8a) gegenüberliegendes zweites distales Ende (8b) umfasst, wobei an dem zweiten distalen Ende (8b) Anschlusspins zur elektrischen Kontaktierung der Messeinheit (1) ausgebildet sind, und wobei der Füllkörper (101a) eine Dichtung des Gehäuses (7) im Bereich der Anschlusspins (73) ausbildet.

7. Messeinheit (1) nach einem der Ansprüche 1 bis 6, wobei in dem Gehäuse (7) ein Leuchtmittel (20) angeordnet ist, das Gehäuse (7) ein wenigstens teilweise transparentes Gehäuseteil (19) zum Bereitstellen einer Leuchtanzeige (17) umfasst, welches einen Teil der äußeren Oberfläche des Gehäuses (7) bildet, und der Füllkörper (101a) einen Raum zwischen dem Leuchtmittel (20) und dem transparenten Gehäuseteil (19) ausfüllt, wobei der Füllkörper (101a) für das von dem Leuchtmittel (20) ausgesendete Licht wenigstens teilweise transparent ist.

8. Optoelektronisches Sensorsystem mit wenigstens einer Messeinheit (1) nach einem der Ansprüche 1 bis 7, wobei die Messeinheit (1) die Lichtsendeeinheit und die Empfangseinheit umfasst; oder mit wenigstens zwei separaten Messeinheiten (1) nach einem der Ansprüche 1 bis 7, wobei eine der Messeinheiten (1) die Empfangseinheit (2) und eine der Messeinheiten (1) die Sendeeinheit umfasst.

## Claims

1. Measuring unit (1) for an optoelectronic sensor system, comprising a housing (7) in which a control circuit as well as a light transmission unit (5) having a light source and/or a reception unit (2) having a photodetector (3) are arranged;
wherein the light transmission unit (5) and/or the reception unit (2) comprises at least one retaining element (59, 91a, 91b) for fastening and is arranged in a region of a first distal end (8a) of the housing (7), wherein the housing (7) is at least partially filled with a potted filler body (101a) and the filler body (101a) is form-fittingly and/or force-fittingly connected to the retaining element (59) in order to fasten the light transmission unit (5) and/or the reception unit (2), **characterized in that** the measuring unit comprises a component carrier (41) fastened to the housing (7), wherein the light transmission unit (5) comprises a radiation source and an adjustment carrier (85) and is force-fittingly and/or form-fittingly fastened to the component carrier (41) by means of the filler body (101a), and wherein the component carrier (41) has a recess (81) open toward the first distal end (8a), wherein the adjustment carrier (85) is convex on a side facing away from the first distal end (8a) and is arranged in the recess (81), and wherein the recess (81) comprises a first opening (83) and the adjustment carrier (85) comprises a second opening (89), wherein contact pins (37) of the radiation source extend through the first opening (83) and the second opening (89), and wherein the filler body (101a) extends through the second opening (89) into the first opening (83) and/or extends into an intermediate space formed between the component carrier (41) and the adjustment carrier (85), wherein the adjustment carrier (85) is force-fittingly and/or form-fittingly fastened to the component carrier (41) with the aid of the filler body (101a).

2. Measuring unit (1) according to claim 1, wherein the reception unit (2) comprises a first lens unit (51) having a reception lens (53) for focusing incident light onto the photodetector (3) and the first lens unit (51) comprises at least one retaining element (59) for fastening the reception unit (2) by means of the filler body (100a);
and/or wherein the light transmission unit (5) comprises a second lens unit (55) having a transmission lens (57) for focusing the light transmitted by the light source and the second lens unit (55) comprises at least one retaining element (59) for fastening the light transmission unit (5) by means of the filler body (100a).

3. Measuring unit (1) according to claim 2, wherein the first lens unit (51) and the second lens unit (55) are formed integrally with each other and comprise the transmission lens (53) and the reception lens (57), as well as at least one retaining element (59) for fastening the reception unit (2) by means of the filler body (100a).

4. Measuring unit (1) according to any of claims 1 to 3, wherein the control circuit comprises a second printed circuit board (23) on which an optical sensor (31) of the photodetector (3) is arranged, wherein the second printed circuit board (23) is arranged in a plane perpendicular to an optical axis of the reception lens (53) or perpendicular to an axial direction of the housing (7), and wherein a side of the second printed circuit board (23) opposite the optical sensor (31) is at least partially surrounded by the filler body (101a), and/or
wherein the control circuit comprises a first printed circuit board (21) which extends in a direction parallel to the optical axis of the reception lens (53) or in a direction parallel to the axial direction of the housing (7), wherein electronic components located on the first printed circuit board (21) are at least partially surrounded by the filler body (101a).

5. Measuring unit (1) according to any of claims 1 to 4, wherein the filler body seals the housing (7) toward the first distal end (8a).

6. Measuring unit (1) according to any of claims 1 to 5, wherein the housing (7) comprises a second distal end (8b) opposite the first distal end (8a), wherein terminal pins for electrically contacting the measuring unit (1) are formed at the second distal end (8b), and wherein the filler body (101a) forms a seal of the housing (7) in the region of the terminal pins (73).

7. Measuring unit (1) according to any of claims 1 to 6, wherein an illuminant (20) is arranged in the housing (7), the housing (7) comprises an at least partially transparent housing part (19) in order to provide a light indicator (17), which housing part forms part of the outer surface of the housing (7), and the filler body (101a) fills a space between the illuminant (20) and the transparent housing part (19), wherein the filler body (101a) is at least partially transparent to the light emitted by the illuminant (20).

8. Optoelectronic sensor system having at least one measuring unit (1) according to any of claims 1 to 7, wherein the measuring unit (1) comprises the light transmission unit and the reception unit; or having at least two separate measuring units (1) according to any of claims 1 to 7, wherein one of the measuring units (1) comprises the reception unit (2) and one of the measuring units (1) comprises the transmission unit.

## Revendications

1. Unité de mesure (1) pour un système à capteur optoélectronique, comprenant un boîtier (7) dans lequel sont disposées une unité d'émission de lumière (5) comportant une source de lumière et/ou une unité de réception (2) comportant un photodétecteur (3), ainsi qu'un circuit de commande ;
dans laquelle l'unité d'émission de lumière (5) et/ou l'unité de réception (2) comprennent au moins un élément de maintien (59, 91a, 91b) pour la fixation et sont disposées dans une zone d'une première extrémité distale (8a) du boîtier (7), dans laquelle le boîtier (7) est au moins partiellement rempli d'un corps de remplissage (101a) coulé et le corps de remplissage (101a) est relié par complémentarité de formes et/ou par force à l'élément de maintien (59) pour la fixation de l'unité d'émission de lumière (5) et/ou de l'unité de réception (2), **caractérisée en ce que** l'unité de mesure comprend un support de composants (41) fixé au boîtier (7), dans laquelle l'unité d'émission de lumière (5) comprend une source de rayonnement et un support d'ajustement (85) et est fixée au support de composants (41) par force et/ou par complémentarité de formes par le biais du corps de remplissage (101a), et dans laquelle le support de composants (41) présente un évidement (81) ouvert en direction de la première extrémité distale (8a), dans laquelle le support d'ajustement (85) est réalisé sous forme convexe sur un côté opposé à la première extrémité distale (8a) et est disposé dans l'évidement (81), et dans laquelle l'évidement (81) comprend une première ouverture (83) et le support d'ajustement (85) comprend une seconde ouverture (89), dans laquelle des broches de contact (37) de la source de rayonnement s'étendent à travers la première ouverture (83) et la seconde ouverture (89) et dans laquelle le corps de remplissage (101a) s'étend à travers la seconde ouverture (89) dans la première ouverture (83) et/ou dans un espace intermédiaire réalisé entre le support de composants (41) et le support d'ajustement (85), dans laquelle le support d'ajustement (85) est fixé par force et/ou par complémentarité de formes au support de composants (41) à l'aide du corps de remplissage (101a).

2. Unité de mesure (1) selon la revendication 1, dans laquelle l'unité de réception (2) comprend une première unité à lentille (51) comportant une lentille de réception (53) pour focaliser la lumière incidente sur le photodétecteur (3) et la première unité à lentille (51) comprend au moins un élément de maintien (59) pour la fixation de l'unité de réception (2) par le biais du corps de remplissage (100a) ;
et/ou dans laquelle l'unité d'émission de lumière (5) comprend une seconde unité à lentille (55) comportant une lentille d'émission (57) pour focaliser la lumière émise par la source de lumière et la seconde unité à lentille (55) comprend au moins un élément de maintien (59) pour la fixation de l'unité d'émission de lumière (5) par le biais du corps de remplissage (100a).

3. Unité de mesure (1) selon la revendication 2, dans laquelle la première unité de lentille (51) et la seconde unité de lentille (55) sont réalisées d'un seul tenant l'une avec l'autre et comprennent la lentille d'émission (53) et la lentille de réception (57), ainsi qu'au moins un élément de maintien (59) pour la fixation de l'unité de réception (2) par le biais du corps de remplissage (100a).

4. Unité de mesure (1) selon l'une des revendications 1 à 3, dans laquelle le circuit de commande comprend une seconde carte de circuits imprimés (23) sur laquelle est disposé un capteur optique (31) du photodétecteur (3), dans laquelle la seconde carte de circuits imprimés (23) est disposée dans un plan perpendiculaire à un axe optique de la lentille de réception (53) ou perpendiculaire à une direction axiale du boîtier (7), et dans laquelle un côté de la seconde carte de circuits imprimés (23) opposé au capteur optique (31) est au moins partiellement entouré par le corps de remplissage (101a), et/ou
dans laquelle le circuit de commande comprend une première carte de circuits imprimés (21) qui s'étend dans une direction parallèle à l'axe optique de la lentille de réception (53) ou dans une direction parallèle à la direction axiale du boîtier (7), dans laquelle des composants électroniques situés sur la première carte de circuits imprimés (21) sont au moins partiellement entourés par le corps de remplissage (101a).

5. Unité de mesure (1) selon l'une des revendications 1 à 4, dans laquelle le corps de remplissage assure l'étanchéité du boîtier (7) vers la première extrémité distale (8a).

6. Unité de mesure (1) selon l'une des revendications 1 à 5, dans laquelle le boîtier (7) comprend une seconde extrémité distale (8b) opposée à la première extrémité distale (8a), dans laquelle des broches de connexion sont réalisées au niveau de la seconde extrémité distale (8b) pour la mise en contact électrique de l'unité de mesure (1), et dans laquelle le corps de remplissage (101a) réalise un joint d'étanchéité du boîtier (7) dans la zone des broches de connexion (73).

7. Unité de mesure (1) selon l'une des revendications 1 à 6, dans laquelle un moyen d'éclairage (20) est disposé dans le boîtier (7), le boîtier (7) comprend une partie de boîtier (19) au moins partiellement transparente pour fournir un indicateur lumineux (17), laquelle forme une partie de la surface extérieure du boîtier (7), et le corps de remplissage (101a) remplit un espace entre le moyen d'éclairage (20) et la partie de boîtier (19) transparente, dans laquelle le corps de remplissage (101a) est au moins partiellement transparent à la lumière émise par le moyen d'éclairage (20).

8. Système à capteur optoélectronique comportant au moins une unité de mesure (1) selon l'une des revendications 1 à 7, dans lequel l'unité de mesure (1) comprend l'unité d'émission de lumière et l'unité de réception ; ou comportant au moins deux unités de mesure (1) séparées selon l'une des revendications 1 à 7, dans lequel l'une des unités de mesure (1) comprend l'unité de réception (2) et l'une des unités de mesure (1) comprend l'unité d'émission.
